# EUROPÄISCHE PATENTSCHRIFT

(11) **EP 2 573 057 B1**
(45) Veröffentlichungstag und Bekanntmachung des Hinweises auf die Patenterteilung: **30.12.2015**
(21) Anmeldenummer: 12179727.8
(22) Anmeldetag: 08.08.2012
(51) Int. Cl.: C03C 4/08, C03C 4/10, C03C 3/093

(54) **Arsen- und antimonfreies, titanoxidhaltiges Borosilikatglas und Verfahren zu dessen Herstellung**
Arsenic and antimony free, titanium oxide containing borosilicate glass and methods for the production thereof
Verre de borosilicate contenant de l'oxyde de titanium et dépourvu d'arsenic et d'antimoine, et son procédé de fabrication.

(30) Priorität: 12.08.2011 DE 102011052622
(43) Veröffentlichungstag der Anmeldung: 27.03.2013
(73) Patentinhaber: Schott AG, 55122 Mainz (DE)
(72) Erfinder: Wegener, Holger, 31061 Alfeld (DE); Grygarova, Lenka, 38644 Goslar (DE); Schwertfeger, Rainer, 37632 Eschershausen (DE); Kassner, Reinhard, 31073 Delligsen (DE)
(74) Vertreter: Hrovat, Andrea Darinka

(56) Entgegenhaltungen:
- WO-A1-03/024878
- WO-A2-01/49620
- WO-A2-02/088042
- DE-A1-102009 029 086
- US-A- 1 995 952
- US-A- 2 524 719

## Beschreibung

Die vorliegende Erfindung betrifft Titanoxid enthaltende Borosilikat-Gläser, bei deren Herstellung auf den Einsatz von Arsen- und Antimonverbindungen als Läutermittel verzichtet wurde. Des Weiteren umfasst die vorliegende Erfindung ein umweltschonendes Läuterverfahren für Borosilikat-Gläser basierend auf der Verwendung sauerstoffhaltiger Selen-Verbindungen als Läutermittel.

Die Gläser der vorliegenden Erfindung sind frei von störenden Gelb- oder Brauntönen, wie sie vermehrt bei der Herstellung von Titanoxid enthaltenden Glaszusammensetzungen auftreten, wenn auf Arsen- und Antimonverbindungen als Läutermittel verzichtet wird.

Die erfindungsgemäßen Gläser sind als Rohstoff zur Herstellung von IR-Lichtleitern, Abdeck-Gläsern für Fotosensoren, UV-Filter-Gläsern oder dergleichen besonders geeignet.

Glaszusammensetzungen mit einem Eisenoxidgehalt von 50 bis 200 ppm, wie er bei TiO₂-haltigen Borosilikatgläsern häufig auftritt, unterliegen der Gefahr der Verfärbung während des Schmelzvorgangs. Die Eisenoxidgehalte sind gängig und werden durch Verunreinigungen der Hauptkomponenten des Glases mit diesem Stoff hervorgerufen. Die Verfärbung beruht auf der Bildung von Eisen(II)titanat, also FeTiO₃ oder Ilmenit, bei dem es sich - formal betrachtet - um eine Mischverbindung aus Titandioxid TiO₂ und Eisen(II)oxid, FeO, handelt. Zur Bildung des Ilmenits ist es erforderlich, dass das in der Glasschmelze vorhandene Eisen in seiner zweiwertigen Oxidationsstufe vorliegt. Die Ilmenit-Bildung ist hingegen gehemmt, wenn große Teile des Eisens die Oxidationsstufe +III aufweisen, wie dies im Fe₂O₃ der Fall ist.

Dies kann dadurch erreicht werden, dass der Glasschmelze oxidierende Substanzen beigefügt werden, welche in der Glasschmelze zur sukzessiven Freisetzung elementaren Sauerstoffs oder anderer oxidierender Gase führen und so für eine mehr oder weniger konstante Konzentration des oxidierenden Gases in der Glasschmelze sorgen. Der konstante Pegel der oxidierenden Gase hat wiederum zur Folge, dass die in der Glasschmelze vorhandenen Metalle, darunter auch das Eisen, während des Schmelz- und Läutervorgangs in ihren höheren Oxidationsstufen verharren oder überhaupt erst in diese überführt werden. In oxidierter Form rufen diese Verbindungen in der Regel eine nur schwach ausgeprägte bis keine Verfärbung des Glases hervor. Auch beim und nach dem Erstarren werden solche oxidierten Verbindungen nicht reduziert.

Eine weitere, denkbare Möglichkeit, in der Glasschmelze ein oxidierendes Milieu zu erzeugen, ist das direkte Einleiten von Sauerstoff in die Schmelzaggregate. Ein solches Verfahren ist jedoch nur für solche Prozesse geeignet, bei denen große Prozessgefäße eingesetzt werden. Allerdings ist mit solchen Verfahren eine Feinverteilung des Sauerstoffs in der Glasschmelze, wie sie mit den Läutermitteln erzeugt wird, technisch bisher noch nicht umsetzbar.

In US 1,995,952 A sind Läuterverfahren beschrieben, wobei eine kostengünstige Verfahrensführung angestrebt ist. Auf den Einsatz von Arsenverbindungen soll aufgrund der störenden Verfärbungen und/oder Blasenbildung verzichtet werden. Sattdessen sind Elemente der Schwefelgruppe des Periodensystems der Elemente mit Molekulargewichten zwischen 32 und 128 als Läutermittel vorgeschlagen. Für eisenhaltige Gläser wird Tellur nahegelegt. Für Borosilikatgläser sind Schwefel oder Tellur empfohlen.

DE 10 2009 029 086 A1 betrifft ein solarisationsbeständiges Kalk-Natron-Glas geeignet als Deckglas in Solarmodulen, wobei eine geringe Solarisationsneigung angestrebt ist. Das Glas umfasst geringe Anteile an den Dotierstoffen TiO₂ und/oder CeO₂. Als Läutermittel ist SeO₃²⁻ genannt als ein mögliches Läutermittel einer Läutermittelmischung für Gläser, die CeO₂, CaO und Ag₂O umfassen. Für TiO₂-haltige Gläser ist Sb₂O₃ empfohlen.

WO 01/49620 A2 offenbart erdalkalifreie Borosilikatgläser, die SiO₂, B₂O₃, Al₂O₃, Na₂O, K₂O, ZnO und TiO₂ umfassen. Daneben können übliche Läutermittel enthalten sein. Dabei wird auf Gläser für Displays und Datenträger mit hoher chemischer Stabilität abgestellt, die zudem ausreichend kristallisationsstabil sind und sich kosteneffizient herstellen lassen. Die üblichen Läutermittel enthaltend Arsen und Antimon sind unerwünscht.

Um einen dauerhaft hohen O₂-Pegel in der Glasschmelze zu erzielen, verwendet man in der Praxis bevorzugt ein Gemisch aus Arsen- und Antimon-Oxiden oder verschiedene Oxide des Arsens oder des Antimons getrennt voneinander.

Solche Gemische geben gestaffelt Sauerstoffgas ab, wobei Antimonoxid einen hohen O₂-Freisetzungspeak bei ca. 1150°C aufweist, während der O₂-Freisetzungspeak des Arsenoxids bis zu Temperaturen von 1250°C oder höher reicht. Damit arbeiten diese Oxide bei Temperaturen, die es ermöglichen, in vielen Glasschmelzen als Läutermittel eingesetzt zu werden.

Ein großer Nachteil dieser Läutersysteme aus Arsen- und Antimonoxiden ist die hohe Toxizität und Umweltschädlichkeit der Arsen- und Antimon-Verbindungen, weshalb deren Einsatz bereits heute zahlreichen gesetzlichen Restriktionen unterliegt, welche sich in der Zukunft noch deutlich verschärfen werden. Daher ist die Glasindustrie bestrebt, geeignete Ersatzstoffe für diese effektiven Läutermittel zu finden.

Eine häufig gewählte Option ist der Einsatz von Sulfaten, Zinnoxid, Halogeniden oder einer Kombination dieser Stoffe. Allerdings führen diese Substanzen in der Regel zu einer weit weniger ausgeprägten Oxidationswirkung auf die Glasschmelzen während des Läuterprozesses, was wiederum eine Braunfärbung der Gläser durch Ilmenitbildung zur Folge hat

Halogenide sind bei höheren Prozesstemperaturen sehr flüchtige Verbindungen, was wiederum dazu führt, dass die Glasschmelzen schnell an diesen Verbindungen verarmen. Dies macht wiederum ein Überdosieren der Halogenid-Läutermittel erforderlich. Dieses Überdosieren führt wiederum zu verstärkter Halogenwasserstoffsäureemission. Diese ist zum einen unter dem Blickwinkel der Umweltverträglichkeit des Prozesses unerwünscht. Zum anderen führt die vermehrte Säurefreisetzung zu einem beschleunigten Verschleiß der Produktionsanlagen und treibt dadurch langfristig die Prozesskosten in die Höhe.

Auch Nitrate, wie beispielsweise Kaliumnitrat, die gelegentlich als Ersatzläutermittel verwendet werden, neigen dazu, die bei der Zersetzung entstehenden, oxidierenden Gase, allen voran den Sauerstoff, zu früh, d. h. bei zu niedrigen Temperaturen, an die Glasschmelze abzugeben. Aus diesem Grund sind auch sie zum Läutern bei Temperaturen von oberhalb 1000°C schlecht geeignet. Nitrate werden bevorzugt in Kombination mit Arsen(III)oxid oder Antimon(III)oxid eingesetzt, die in der Glasschmelze dadurch in As(V)oxid oder Antimon(V)oxid überführt werden. Als solche geben sie den Sauerstoff beim Läuterprozess ab.

Es ist daher die Aufgabe der vorliegenden Erfindung, Titanoxid enthaltende Borosilikatgläser bereitzustellen, welche keine störenden Verfärbungen aufweisen, auch wenn beim Läutern der Gläser auf den Einsatz von Arsen- oder Antimonverbindungen verzichtet wird. Darüber hinaus sollen die betreffenden Gläser auch im IR-Bereich über Transmissionswerte verfügen, wie sie für Gläser üblich sind, bei denen Arsen- und Antimonverbindungen als Läutermittel zum Einsatz kommen.

Die Aufgabe wird gelöst durch ein arsen- und antimonfreies Borosilikatglas, das die folgenden Oxide, in Gew.-%, bezogen auf die Gesamtmenge an Glas, umfasst:

| | |
|---|---|
| SiO₂ | 30 bis 85 |
| B₂O₃ | 3 bis 20 |
| al₂O₃ | 0 bis 15 |
| Na₂O | 3 bis 15 |
| K₂O | 3 bis 15 |
| ZnO | 0 bis 12 |
| TiO₂ | 0,5 bis 10 |
| CaO | 0 bis 0,1 |

sowie mindestens eine sauerstoffhaltige Selenverbindung in Mengen von 0,001 Gew.-% bis 0,1 Gew.-% bezogen auf die Gesamtmenge an Glas, wobei diese Verbindung ausgewählt ist aus Salzen der selenigen Säure, Salzen der Selensäure, Selendioxid (SeO₂), Selentrioxid (SeO₃) und Mischungen davon und ferner mindestens 150 ppm (m/m) Sulfat.

Die Matrix des Glases umfasst bevorzugt SiO₂ in einem Anteil von wenigstens 30 Gew.-%, bevorzugt wenigstens 35 Gew.-% und besonders bevorzugt wenigstens 40 Gew.-%. SiO₂ ist der wichtigste Netzwerkbildner in der Glasmatrix, der die Glaseigenschaften wesentlich prägt. SiO₂ sorgt vor allem für die chemische Beständigkeit des Glases. Allerdings sollte der Gehalt an SiO₂ im Glas nicht den Wert von 85 Gew.-%, bevorzugt 75 Gew.-% und besonders bevorzugt 70 Gew.-% übersteigen, da dies den Erweichungspunkt des Glases zu sehr erhöhen würde.

Neben SiO₂ umfasst das erfindungsgemäße Glas auch noch einen zweiten Netzwerkbildner. Dabei handelt es sich um B₂O₃, das in einem Anteil von wenigstens 3 Gew.-%, bevorzugt wenigstens 4 Gew.-% und besonders bevorzugt wenigstens 5 Gew.-% in der Glaszusammensetzung enthalten ist. B₂O₃ unterstützt durch seine netzwerkbildenden Eigenschaften wesentlich die Stabilität des Glases. Liegt der Gehalt an B₂O₃unter den angegebenen Werten, kann die erforderliche Stabilität im Borosilikatglassystem nicht mehr gewährleistet werden. Gleichwohl sollte der Gehalt an B₂O₃ im Glas einen Wert von 20 Gew.-%, bevorzugt 17 Gew.-% und besonders bevorzugt 15 Gew.-% nicht übersteigen, da sonst eine zu starke Verringerung der Viskosität eintritt und somit eine Verminderung der Kristallisationsstabilität in Kauf genommen werden muss.

Es ist erfindungsgemäß bevorzugt, dass das Glas Aluminiumoxid umfasst. Der Zusatz von Aluminiumoxid dient der Verbesserung der Glasbildung und trägt im Wesentlichen zur Verbesserung der chemischen Beständigkeit bei. Zu hohe Gehalte führen jedoch zu einer verstärkten Kristallisationsneigung. Aus diesem Grund sollte der Aluminiumoxid-anteil im erfindungsgemäßen Glas den Wert von 15 Gewichtsprozent, bevorzugt 12 Gewichtsprozent und besonders bevorzugt 10 Gewichtsprozent nicht übersteigen. Geeignete Mengen an Aluminiumoxid im Glas sind beispielsweise 0,1 Gew.-%, 0,5 Gew.-%, 0,75 Gew.-%, 1,0 Gew.-%, 3 Gew.-%, 5 Gew.-% oder 10 Gew.-%.

Das Glas umfasst bevorzugt Alkalimetalloxide in einem Anteil von wenigstens 6 Gew.-%, bevorzugt wenigstens 9 Gew.-%, und besonders bevorzugt wenigstens 12 Gew.-%. Alkalimetalloxide im Sinne der vorliegenden Erfindung sind bevorzugt Na₂O und K_{2O}. Alkalimetalloxide verbessern die Schmelzbarkeit des Glases und ermöglichen somit eine wirtschaftliche Herstellung. Bei der Glasherstellung dienen sie als Flussmittel. Die Summe der Alkalimetalloxide im Glas sollte den Wert von 30 Gew.-%, bevorzugt 26 Gew.-% und besonders bevorzugt 24 Gew.-% nicht übersteigen, da dies die Verwitterungsbeständigkeit des Glases beeinträchtigen und somit dessen Anwendungsbereich stark einschränken würde.

In einer besonders bevorzugten Ausführungsform betragen die Anteile an Na₂O und K₂O im Glas jeweils mindestens 3 Gew.-%. In einer weiter bevorzugten Ausführungsform übersteigen die Anteile an Na₂O und K₂O im Glas jeweils nicht den Wert von 12 Gew.-%.

Die Glaszusammensetzungen der vorliegenden Erfindung umfassen Titandioxid. Dieses wird den Gläsern zugesetzt, um deren optische Eigenschaften zu verbessern. Insbesondere kann mit Hilfe von Zusätzen von Titandioxid der Brechungsindex der Gläser gezielt eingestellt werden. So steigt der Brechungsindex mit ansteigendem TiO₂-Gehalt des Glases an. In erfindungsgemäßen Ausführungen beträgt der TiO₂-Gehalt im Glas mindestens 0,5 Gew.-%, bevorzugt mindestens 1 Gew.-% und besonders bevorzugt mindestens 1,5 Gew.-%. Zu hohe TiO₂-Gehalte führen jedoch zu unerwünschter Kristallisation des Glases, daher sollte der Anteil an TiO₂ im Glas den Wert von 10 Gew.-%, bevorzugt 8 Gew.-% und besonders bevorzugt 6 Gew.-% nicht überschreiten. Der Zusatz von Titanoxid besitzt noch einen weiteren Vorteil: Durch diese Maßnahme erfolgt eine Verschiebung der UV-Kante des Transmissionsspektrums des Glases hin zu längeren Wellenlängen, und zwar umso mehr, je mehr Titanoxid zugesetzt wird.

Auf diese Weise stehen die erfindungsgemäß hergestellten Gläser für ein weites Spektrum möglicher optischer Anwendungen zu Verfügung, etwa als UV-Filter oder dergleichen. Ein vergleichbarer Effekt könnte bei Gläsern ohne Titanoxid-Zusätze nur durch Aufbringen einer zusätzlichen Schicht auf das Glas erreicht werden.

Als zusätzliches Flussmittel sowie zur gezielten Einstellung des Schmelzpunktes können die Glaszusammensetzungen der vorliegenden Erfindung auch noch Zinkoxid ZnO umfassen. Durch Zusätze des Netzwerkwandlers ZnO kann der Schmelzpunkt des Glases herabgesetzt werden. In bevorzugten Ausführungsformen sollte der Gehalt an ZnO im Glas den Wert von 12 Gew.-%, bevorzugt 10 Gew.-% und besonders bevorzugt 8 Gew.-% jedoch nicht überschreiten, weil dies den Schmelzpunkt der erfindungsgemäßen Gläser zu stark absenken würde.

Die Glaszusammensetzungen der vorliegenden Erfindung umfassen geringe Mengen an Selenoxid SeO₂. Selenverbindungen werden bei der Glasherstellung den erfindungsgemäßen Gläsern zugesetzt, um die Wertigkeit des Eisens während des Schmelzvorgangs zu erhöhen. Bevorzugte Ausführungsformen der vorliegenden Erfindung verfügen über einen SeO₂-Anteil von mindestens 10 ppm, bevorzugt 50 ppm und besonders bevorzugt 100 ppm. Da Selenoxid in höheren Mengen eine färbende Wirkung auf Gläser entfaltet, wobei es eine Rosafärbung hervorruft, sollte der Gesamtanteil an SeO₂ im Glas einen Wert von 0,1 Gew.-%, bevorzugt 0,05 Gew.-% und besonders bevorzugt 0,01 Gew.-% nicht überschreiten.

In einer bevorzugten Ausführungsform der Erfindung bestehen die erfindungsgemäßen Gläser ausschließlich aus den Oxiden des Siliziums, des Bors, des Aluminiums, der Alkalimetalle Natrium und Kalium, des Titans, des Zinks und des Selens, d. h. die Glaszusammensetzungen umfassen keine weiteren Komponenten neben den hier erwähnten.

Gemäß der Erfindung enthalten die erfindungsgemäßen Glaszusammensetzungen neben oben genannten Oxiden auch noch geringe Mengen an Sulfat. Dabei liegt der Sulfat-Gehalt im Glas bei mindestens 150 ppm, bevorzugt bei mindestens 250 ppm und besonders bevorzugt bei mindestens 350 ppm.

In besonders bevorzugten Ausführungsformen der Erfindung beträgt der Sulfat-Gehalt jedoch nicht mehr als 450 ppm, bevorzugt nicht mehr als 350 ppm und besonders bevorzugt nicht mehr als 250 ppm.

Sulfat wurde den Glaszusammensetzungen der vorliegenden Erfindung während des Herstellungsprozesses zugesetzt, um damit eine Läuterwirkung im Glas zu erzielen.

Andere erfindungsgemäße Gläser können neben den zuvor genannten Komponenten noch weitere Zusätze enthalten. Bei weiteren Zusätzen kann es sich beispielsweise um Beimengungen weiterer Alkali- oder Erdalkalimetallverbindungen (z. B. Li₂O, MgO, CaO) handeln, welche den Gläsern zugesetzt wurden, um die Fließ- und Schmelzeigenschaften oder die chemische Beständigkeit des Glases zu beeinflussen.

Die Erfindung umfasst auch Gläser der beschriebenen Zusammensetzung, welche mit Zusätzen versehen wurden, um die optischen Eigenschaften, z. B. den Brechungsindex, der Gläser zu beeinflussen. Solch ein Zusatz kann beispielsweise Bariumoxid BaO sein. Durch Zusätze von BaO kann der Brechungsindex des Glases stark erhöht werden.

Bei weiteren Zusätzen, die unerwünscht jedoch kaum vermeidbar in den verschiedenen Ausführungsformen der erfindungsgemäßen Gläser vorliegen, kann es sich beispielsweise um d-Gruppen-Metalloxide, wie etwa Eisenoxide (FeO, Fe₂O₃, Fe₃O₄) handeln oder etwa um Schwefelverbindungen (Sulfide und Sulfate). Eisenoxide sind gängige Verunreinigungen der Hauptkomponenten des Glases, insbesondere Verunreinigungen des Sandes.

Die erfindungsgemäßen Glaszusammensetzungen sind jedoch frei von Verbindungen des Arsens und des Antimons. Die Freiheit von diesen Verbindungen bedeutet, dass keine Verbindungen des Arsens oder Antimons, insbesondere keine Oxide des Arsens und Antimons, den Gläsern zugegeben werden. Die erfindungsgemäßen Gläser umfassen damit weniger als 10 ppm, bevorzugt weniger als 5 ppm und besonders bevorzugt weniger als 1 ppm der Oxide des Antimons. Der Anteil des Arsenoxids in den erfindungsgemäßen Glaszusammensetzungen bewegt sich im Bereich < 3 ppm.

### Glasherstellung

In bevorzugten Ausführungen der Erfindung können die erfindungsgemäßen Gläser mit Hilfe klassischer Verfahren zur Glasherstellung, wie etwa dem Down-Draw-Verfahren, dem Overflow-Fusion-Verfahren oder dem Float-Verfahren hergestellt werden. Jedoch sind auch andere Herstellungsprozesse denkbar, wie etwa Verfahren, welche zur Herstellung von Glasrohren oder Glasbehältern üblich sind.

Die Herstellung der erfindungsgemäßen Gläser kann folgende Schritte umfassen:
- Mischen von Ausgangskomponenten, bei denen es sich um die üblichen Rohstoffe der Glasherstellung handelt, wie etwa um Carbonate, Sulfate, Nitrate, Hydroxide oder Oxide
- Erhitzen des Gemisches auf eine Temperatur von mindestens 1350 bis 1550°C, wodurch eine homogene Schmelze gebildet wird
- Abkühlung der Schmelze auf die Formgebungstemperatur und dabei oder danach wahlweise Formgebung des Glases.

Eine Ausführungsform der Erfindung zeichnet sich dadurch aus, dass die besagte Formgebung spannungsfrei durch Aufbringen der Schmelze auf ein Floatbad erfolgt.

Eine weitere Ausführungsform der Erfindung sieht eine Formgebung des Glases durch das Down-Draw-Verfahren vor.

Gemäß einer Ausführungsform der Erfindung findet die Läuterung in einem speziell dafür vorgesehenen Läutergefäß oder einem räumlich abgetrennten Bereich der Glasherstellungsanlage, etwa einer Läuterrinne, statt.

In einer weiteren bevorzugten Ausführungsform der Erfindung bedarf es eines solchen zusätzlichen Läuterbehältnisses (räumlich getrenntes Läutergefäß oder Läuterrinne) nicht. Hier findet die Läuterung parallel zu anderen Prozessschritten der Glasherstellung statt, etwa parallel zur Schmelze oder zur Homogenisierung.

In einer Ausführungsform der Erfindung werden lediglich Selenverbindungen, bevorzugt sauerstoffhaltige Verbindungen des Selens, besonders bevorzugt Salze der selenigen Säure (Selenite), wie etwa Natriumselenit Na₂SeO₃ oder Salze der Selensäure (Selenate) und/ oder deren Hydrate, wie etwa Natriumselenat-Decahydrat Na₂SeO₄. 10 H₂O, oder Selenoxide, wie etwa SeO₂ und SeO₃, als Läutermittel eingesetzt.

Es hat sich erstaunlicherweise gezeigt, dass Selen bezüglich der Oxidationswirkung seiner Verbindungen in Glasschmelzen unter den polyvalenten Elementen eine Sonderstellung einnimmt, wie sie auch Arsen und Antimon innehaben, ohne dabei deren Nachteile (z. B. deren Neigung zur Emission stark toxischer Gase) zu teilen. Damit hebt sich das Selen gegen andere Metalle oder Halbmetalle ab, deren Verbindungen üblicherweise als Ersatzläutermittel für die toxischen Verbindungen des Arsens und Antimons gehandelt werden, die jedoch ein dem Selen analoges Verhalten nicht zeigen. Zu dieser Gruppe an Elementen zählen etwa das Zinn, das Cer oder das Bismut. Es hat sich gezeigt, dass die Verbindungen dieser Elemente, insbesondere deren Oxide, nicht zum erklärten Ziel der vorliegenden Erfindung führen, obwohl die Oxidationszahlen der Elemente in den höheren Oxiden ebenso wie die Redoxpotenziale der Elemente und die Zersetzungstemperaturen der Verbindungen dies nahelegen. Ohne sich hier auf eine Theorie festlegen zu wollen, gehen die Erfinder nach bisherigen Erfahrungen und empirischen Erkenntnissen von der Annahme aus, dass der besondere Effekt der Selenverbindungen auf die Tatsache zurückzuführen ist, dass diese Substanzen genau in jenem Temperaturbereich zur Freisetzung von Sauerstoff neigen, bei welchem üblicherweise die Ilmenit-Bildung erfolgt. Auf diese Weise können Zusätze der besagten Selenverbindungen die Ilmenit-Bildung und die damit verbundene Verfärbung der Gläser besonders effektiv verhindern.

Eine bevorzugte Ausführungsform sieht die Verwendung vierwertiger sauerstoffhaltiger Selenverbindungen als alleinige Läutermittel neben Sulfat vor.

Weitere Ausführungsformen der Erfindung basieren auf der Verwendung eines Gemisches vierwertiger und sechswertiger sauerstoffhaltiger Selenverbindungen. Wahlweise kann mindestens ein weiteres Läutermittel, das keine Selen-Verbindung ist, zugegeben werden.

Bei einer bevorzugten Ausführungsform der Erfindung wird lediglich ein Salz der selenigen Säure als einzige Selen-Verbindung in Kombination mit mindestens einem weiteren Läutermittel eingesetzt, bei dem es sich nicht um eine Selen-Verbindung handelt.

In einer besonders bevorzugten Ausführungsform ist dieses Salz der selenigen Säure Natriumselenit Na₂SeO₃.

Eine weitere bevorzugte Ausführungsform sieht die Verwendung sechswertiger, sauerstoffhaltiger Selenverbindungen als alleinigen Läutermitteln vor.

Eine besonders bevorzugte Ausführungsform sieht für die Läuterung der erfindungsgemäßen Gläser die Verwendung eines Salzes der Selensäure oder eines oder mehrerer Hydrate eines Salzes der Selensäure als alleinige Selen-Verbindungen mit mindestens einem weiteren Läutermittel vor, das weder Sulfat noch eine Selen-Verbindung ist.

In einer weiteren besonders bevorzugten Ausführungsform der Verbindung handelt es sich bei dem Salz der Selensäure um Natriumselenat Na₂SeO₄ und/ oder dessen Hydraten.

Alternativ zu den Salzen der selenigen Säure und der Selensäure können auch die Anhydride der beiden sauerstoffhaltigen Säuren des Selens eingesetzt werden: Selendioxid SeO₂ und Selentrioxid SeO₃.

In bevorzugten Ausführungsformen der vorliegenden Erfindung wird anstatt des Salzes der selenigen Säure oder anstatt des Salzes der Selensäure das jeweilige Anhydrid als Läutermittel eingesetzt.

In weiteren bevorzugten Ausführungsformen werden die Salze der selenigen Säure oder der Selensäure in Kombination mit den Anhydriden der beiden Säuren als Läutermittel eingesetzt.

Gemäß der Erfindung wird als zusätzliches Läutermittel neben den Selen-Verbindungen ein Sulfat eingesetzt. Besonders bevorzugte Ausführungsformen der Erfindung verwenden dabei Alkalimetallsulfate, weniger bevorzugte Ausführungsformen hingegen auch Erdalkalimetallsulfate.

Eine spezielle Ausführungsform der Erfindung verwendet Na₂SO₄ als zusätzliches Läutermittel. Eine weitere Ausführungsform verwendet CaSO₄ als zusätzliches Läutermittel. Die vorliegende Erfindung verzichtet vollständig auf die gezielte Zugabe von Arsen- oder Antimonverbindungen zu den Gläsern.

Die Oxidationswirkung der Läutermittel hängt von deren Neigung ab, gasförmigen, reaktiven Sauerstoff an die Glasschmelze abzugeben. Dies geschieht bevorzugt bei der teilweisen oder vollständigen Zersetzung des Läutermittels. Dieser Prozess ist bezüglich des Ausmaßes seines Ablaufs ebenso wie bezüglich seiner Geschwindigkeit stark temperaturabhängig.

Ist die Temperatur der Glasschmelze, in der sich das Läutermittel während des Läuterprozesses befindet, zu niedrig, findet keine ausreichende oder nur eine sehr langsame Zersetzung des Läutermittels statt. Unter diesen Bedingungen kann die Konzentration freien Sauerstoffs in der Glasschmelze nicht den Pegel erreichen, der dazu erforderlich ist, um zum einen die gewünschte Läuterwirkung zu erreichen, zum anderen die Oxidation der Fe²⁺-Ionen zu Fe³⁺-Ionen sicherzustellen. Dann verbleiben zu viele Eisen-Ionen in ihrer niedrigen Oxidationsstufe und es kommt zur Bildung von Ilmenit-Einlagerungen im Glas, welche eine unerwünschte Verfärbung des Glases hervorrufen.

Ist die Temperatur der Glasschmelze während des Läutervorgangs hingegen zu hoch, so erfolgt die Freisetzung gasförmigen Sauerstoffs aus dem sich zersetzenden Läutermittel mit zu hoher Geschwindigkeit. Die Folgen davon können unterschiedlich sein:

Zum einen kann dies dazu führen, dass das Läutermittel den Sauerstoff bereits zu einem Zeitpunkt abspaltet, an dem noch nicht der Großteil der Zersetzungsgase der Glasrohstoffe (z. B.: CO₂, SO₂, SO₃) der Schmelze entwichen ist. Dann verfehlt das Läutermittel seine eigentliche Wirkung, die darin besteht, durch Abgabe gasförmigen Sauerstoffes die letzten Reste eingeschlossener Gase aus der Glasschmelze mitzureißen.

Ein weiterer Nachteil der schnellen Zersetzung des Läutermittels ist die Tatsache, dass dadurch die Einstellung eines relativ konstanten Pegels freien reaktiven Sauerstoffs in der Glasschmelze kaum möglich ist. Dieser ist jedoch erforderlich, um die Reduktion der Fe³⁺-Ionen zu Fe²⁺-Ionen zu verhindern und die Konzentration an Fe²⁺ in den Gläsern so gering wie möglich zu halten.

Aus diesem Grund ist die Temperatur der Glasschmelze während des Läutervorgangs genau einzustellen. In einer bevorzugten Ausführungsform sollte die Temperatur der Glasschmelze einen Wert von mindestens 1300°C, bevorzugt mindestens 1330°C und besonders bevorzugt mindestens 1360°C nicht unterschreiten, sonst ist die Oxidationswirkung des Sauerstoffs in der Glasschmelze zu gering.

Allerdings sollte die Temperatur der Glasschmelze beim Läutervorgang einen Wert von höchstens 1450°C, bevorzugt höchstens 1500°C und besonders bevorzugt höchstens 1550°C nicht überschreiten, sonst erfolgt die Zersetzung des Läutermittels zu schnell und es kann zu den oben beschriebenen, unerwünschten Nebeneffekten kommen, welche die Qualität der erfindungsgemäßen Gläser erheblich beeinträchtigen.

Es hat sich gezeigt, dass die erfindungsgemäß verwendeten Selenverbindungen sich durch die Möglichkeit einer besonders homogenen Verteilung in der Glasschmelze auszeichnen. Auf diese Weise können diese Verbindungen als besonders effektive Oxidationsmittel der Fe-Spezies in den Gläsern fungieren. In dieser Wirkung sind die Selenverbindungen anderen Läutermitteln gleich, welche heute aufgrund ihrer Emission giftiger Gase im Glasherstellungsprozess nicht mehr erwünscht sind.

### Ausführungsbeispiele

### Vergleichsbeispiel 1

Ein TiO₂ enthaltendes Borosilikatglas wurde unter Anwendung einer Standard-Läuterung mit Antimonoxid und Halogeniden hergestellt. Das auf diese Weise erhaltene Glas hatte die folgende Zusammensetzung, in Gew.-%, bezogen auf die Gesamtmenge an Glas:SiO₂ 64,0

| | |
|---|---|
| B₂O₃ | 8,3 |
| Al₂O₃ | 4,0 |
| Na₂O | 6,5 |
| K₂O | 7,0 |
| ZnO | 5,5 |
| TiO₂ | 4,0 |
| Sb₂O₃ | 0,6 |
| Cl⁻ | 0,1 |

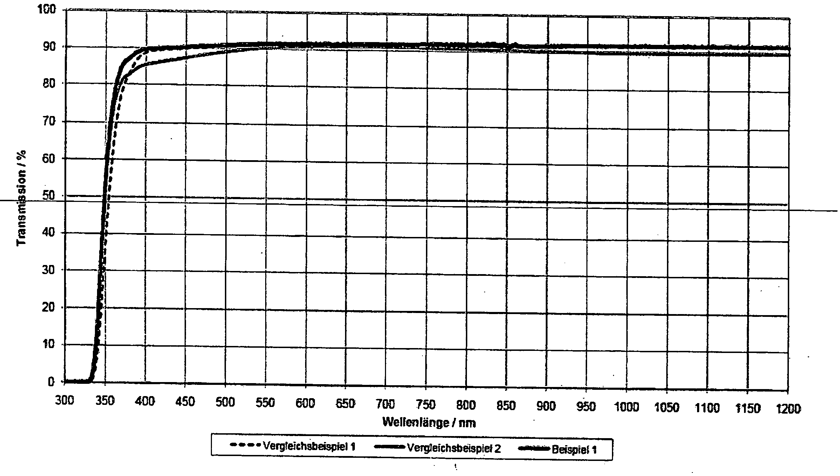

Das Glas war farblos und verfügte über keinerlei unerwünschte Farbtöne. Das Glas wurde im Hinblick auf seine Transmissionseigenschaften im sichtbaren Licht ebenso wie im nahen UV- und IR-Bereich untersucht. Das dabei erhaltene Transmissionsspektrum ist in Abb. 1 dargestellt.

### Vergleichsbeispiel 2

Ein Glas der Zusammensetzung wie unten angegeben wurde durch Erhitzen eines Gemisches der Glasrohstoffe auf ca. 1450°C und anschließendem, ca. vierstündigem Verwahren auf 1500°C hergestellt. Als Läutermittel wurde Sulfat eingesetzt. Vor der Abkühlung der Glasschmelze und der darauf folgenden Formgebung wurde das Glas einem Homogenisierungsschritt unterzogen. Der verwendete Sand hatte einen Anteil von 70 ppm Fe₂O₃, welches als Verunreinigung darin enthalten war. Das auf diese Weise erhaltene Glas hatte bezüglich seiner Hauptkomponenten (unerwünschte Verunreinigungen nicht berücksichtigt) die folgende Zusammensetzung, in Gew.-%, bezogen auf die Gesamtmenge des Glases:

| | |
|---|---|
| SiO₂ | 64,1 |
| B₂O₃ | 8,36 |
| Al₂O₃ | 4,18 |
| Na₂O | 6,32 |
| K₂O | 6,85 |
| ZnO | 5,38 |
| TiO₂ | 4,18 |

Das Glas wurde im Hinblick auf seine Transmissionseigenschaften im sichtbaren Licht ebenso wie im nahen UV- und IR-Bereich untersucht. Das dabei erhaltene Transmissionsspektrum ist in Abb. 1 dargestellt.

### Beispiel 1 (erfindungsgemäß)

Ein Glas der Zusammensetzung wie unten angegeben wurde durch Erhitzen eines Gemisches der Glasrohstoffe auf ca. 1450°C und anschließendem, ca. vierstündigem Verwahren auf 1500°C hergestellt. Als Läutermittel wurde Natriumselenit in Kombination mit Sulfat eingesetzt. Vor der Abkühlung der Glasschmelze und der darauf folgenden Formgebung wurde das Glas einem Homogenisierungsschritt unterzogen. Der verwendete Sand hatte einen Anteil von 70 ppm Fe₂O₃, welches als Verunreinigung darin enthalten war. Das auf diese Weise erhaltene Glas hatte bezüglich seiner Hauptkomponenten (unerwünschte Verunreinigungen nicht berücksichtigt) die folgende Zusammensetzung, in Gew.-%, bezogen auf die Gesamtmenge des Glases:

| | |
|---|---|
| SiO₂ | 64,1 |
| B₂O₃ | 8,36 |
| Al₂O₃ | 4,18 |
| Na₂O | 6,32 |
| K₂O | 6,85 |
| ZnO | 5,38 |
| TiO₂ | 4,18 |
| SeO₂ | 0,025 |

Das Glas war vollkommen farblos. Mit freiem Auge waren keinerlei Unterschiede zum Glas festzustellen, welches die Zusammensetzung aus Vergleichsbeispiel 1 besaß und den dort geschilderten Läuterprozess durchlaufen hatte. Das Glas wurde im Hinblick auf seine Transmissionseigenschaften im sichtbaren Licht ebenso wie im nahen UV-und IR-Bereich untersucht. Das dabei erhaltene Transmissionsspektrum ist in Abb. 1 dargestellt.

Erstaunlicherweise konnte festgestellt werden, dass die Transmissionseigenschaften des Glases, das eine Zusammensetzung gemäß der vorliegenden Erfindung aufwies und den erfindungsgemäßen Läuterprozess durchlaufen hatte, über vergleichbar gute Transmissionseigenschaften im nahen IR verfügte wie die Vergleichsprobe.

## Patentansprüche

1. Arsen- und antimonfreies Borosilikatglas, das die folgenden Oxide, in Gew.-%, bezogen auf die Gesamtmenge an Glas, umfasst:
| | |
|---|---|
| SiO₂ | 30 bis 85 |
| B₂O₃ | 3 bis 20 |
| Al₂O₃ | 0 bis 15 |
| Na₂O | 3 bis 15 |
| K₂O | 3 bis 15 |
| ZnO | 0 bis 12 |
| TiO₂ | 0,5 bis 10 |
| CaO | 0 bis 0,1 |
sowie mindestens eine sauerstoffhaltige Selenverbindung in Mengen von 0,001 Gew.-% bis 0,1 Gew.-% bezogen auf die Gesamtmenge an Glas, wobei diese Verbindung ausgewählt ist aus Salzen der selenigen Säure, Salzen der Selensäure, Selendioxid (SeO₂), Selentrioxid (SeO₃) und Mischungen davon und ferner mindestens 150 ppm (m/m) Sulfat.

2. Arsen- und antimonfreies Borosilikatglas nach Anspruch 1, das die folgenden Oxide, in Gew.-%, bezogen auf die Gesamtmenge an Glas, umfasst:
| | |
|---|---|
| SiO₂ | 35 bis 70 |
| B₂O₃ | 3 bis 17 |
| Al₂O₃ | 0 bis 12 |
| Na₂O | 3 bis 12 |
| K₂O | 3 bis 12 |
| ZnO | 0 bis 10 |
| TiO₂ | 0,5 bis 8 |
| CaO | 0 bis 0,1 |
sowie die sauerstoffhaltige Selenverbindung in Mengen von 0,001 Gew.-% bis 0,1 Gew.-% bezogen auf die Gesamtmenge an Glas.

3. Arsen- und antimonfreies Borosilikatglas nach Anspruch 1 oder 2, das die folgenden Oxide, in Gew.-%, bezogen auf die Gesamtmenge an Glas, umfasst:
| | |
|---|---|
| SiO₂ | 40 bis 70 |
| B₂O₃ | 3 bis 15 |
| Al₂O₃ | 0 bis 10 |
| Na₂O | 3 bis 12 |
| K₂O | 3 bis 12 |
| ZnO | 0 bis 8 |
| TiO₂ | 0,5 bis 6 |
| CaO | 0 bis 0,1 |
sowie die sauerstoffhaltige Selenverbindung in Mengen von 0,001 Gew.-% bis 0,1 Gew.-% bezogen auf die Gesamtmenge an Glas.

4. Borosilikatglas gemäß einem oder mehreren der Ansprüche 1 bis 3, wobei das Glas ausschließlich aus den dort genannten Komponenten besteht.

5. Verfahren zur Herstellung eines Borosilikatglases nach einem der Ansprüche 1 bis 4, folgende Prozessschritte umfassend:
- Mischen von Ausgangskomponenten, bei denen es sich um die Rohstoffe der Glasherstellung handelt, wie etwa um Carbonate, Sulfate, Nitrate, Hydroxide oder Oxide
- Erhitzen des Gemisches auf eine Temperatur von mindestens 1350 bis 1550°C, wodurch eine homogene Schmelze gebildet wird
- Abkühlung der Schmelze auf die Formgebungstemperatur und dabei oder danach wahlweise Formgebung des Glases.

6. Verfahren gemäß Anspruch 5, wobei nach der Läuterung die Schmelze zur Formgebung auf ein Floatbad aufgebracht wird, das Glas nach dem Down-Draw-Verfahren geformt wird oder zu Röhren oder Fasern verarbeitet wird.

7. Verwendung sauerstoffhaltiger Selenverbindungen zur Läuterung eines Borosilikatglases, das die folgenden Oxide, in Gew.-% bezogen auf die Gesamtmenge an Glas, umfasst:
| | |
|---|---|
| SiO₂ | 30 bis 85 |
| B₂O₃ | 3 bis 20 |
| Al₂O₃ | 0 bis 15 |
| Na₂O | 3 bis 15 |
| K₂O | 3 bis 15 |
| ZnO | 0 bis 12 |
| TiO₂ | 0,5 bis 10 |
| CaO | 0 bis 0,1, |
wobei die sauerstoffhaltige Selenverbindung in Mengen von 0,001 Gew.-% bis 0,1 Gew.-%, bezogen auf die Gesamtmenge an Glas, enthalten ist und diese Verbindung ausgewählt ist aus Salzen der selenigen Säure, Salzen der Selensäure, Selendioxid (SeO₂), Selentrioxid (SeO₃) und Mischungen davon und ferner mindestens 150 ppm (m/m) Sulfat.

8. Verwendung eines Glases nach einem oder mehreren der Ansprüche 1 bis 4 als IR-Lichtleiter, Abdeck-Glas für Fotosensoren oder Filter-Glas.

## Claims

1. An arsenic- and antimony-free borosilicate glass, comprising the following oxides, in % by weight, based on the total amount of the glass:
| | |
|---|---|
| SiO₂ | 30 to 85 |
| B₂O₃ | 3 to 20 |
| Al₂O₃ | 0 to 15 |
| Na₂O | 3 to 15 |
| K₂O | 3 to 15 |
| ZnO | 0 to 12 |
| TiO₂ | 0.5 to 10 |
| CaO | 0 to 0.1, |
as well as at least one oxygen-containing selenium compound in amounts of 0.001 % by weight to 0.1 % by weight, based on the total amount of the glass, wherein this compound is selected from salts of the selenious acid, salts of the selenic acid, selenium dioxide (SeO₂), selenium trioxide (SeO₃) and mixtures thereof, and further at least 150 ppm (w/w) of sulfate.

2. The arsenic- and antimony-free borosilicate glass of claim 1, comprising the following oxides, in % by weight, based on the total amount of the glass:
| | |
|---|---|
| SiO₂ | 35 to 70 |
| B₂O₃ | 3 to 17 |
| Al₂O₃ | 0 to 12 |
| Na₂O | 3 to 12 |
| K₂O | 3 to 12 |
| ZnO | 0 to 10 |
| TiO₂ | 0.5 to 8 |
| CaO | 0 to 0.1, |
as well as the oxygen-containing selenium compound in amounts of 0.001 % by weight to 0.1 % by weight, based on the total amount of the glass.

3. The arsenic- and antimony-free borosilicate glass of claim 1 or 2, comprising the following oxides, in % by weight, based on the total amount of the glass:
| | |
|---|---|
| SiO₂ | 40 to 70 |
| B₂O₃ | 3 to 15 |
| Al₂O₃ | 0 to 10 |
| Na₂O | 3 to 12 |
| K₂O | 3 to 12 |
| ZnO | 0 to 8 |
| TiO₂ | 0.5 to 6 |
| CaO | 0 to 0.1, |
as well as the oxygen-containing selenium compound in amounts of 0.001 % by weight to 0.1 % by weight, based on the total amount of the glass.

4. The borosilicate glass according to one or more of claims 1 to 3, wherein the glass exclusively consists of the components mentioned there.

5. A method for the production of a borosilicate glass of one of claims 1 to 4, comprising the following process steps:
- mixing of the starting components which are the raw materials of the glass production such as for example carbonates, sulfates, nitrates, hydroxides or oxides
- heating of the mixture to a temperature of at least 1350 to 1550°C, whereby a homogenous melt is formed
- cooling of the melt to the molding temperature and, at the same time or in an alternative subsequently, molding of the glass.

6. The method according to claim 5, wherein after the refining step the melt is applied onto a floating bath for molding, the glass is molded according to the down draw method or is processed into tubes or fibers.

7. A use of oxygen-containing selenium compounds for refining of a borosilicate glass, comprising the following oxides, in % by weight, based on the total amount of the glass:
| | |
|---|---|
| SiO₂ | 30 to 85 |
| B₂O₃ | 3 to 20 |
| Al₂O₃ | 0 to 15 |
| Na₂O | 3 to 15 |
| K₂O | 3 to 15 |
| ZnO | 0 to 12 |
| TiO₂ | 0.5 to 10 |
| CaO | 0 to 0.1, |
wherein the oxygen-containing selenium compound is contained in amounts of 0.001 % by weight to 0.1 % by weight, based on the total amount of the glass, and this compound is selected from salts of the selenious acid, salts of the selenic acid, selenium dioxide (SeO₂), selenium trioxide (SeO₃) and mixtures thereof, and further at least 150 ppm (w/w) of sulfate.

8. A use of a glass of one or more of claims 1 to 4 as optical IR light guide, cover glass for photo sensors or filter glass.

## Revendications

1. Verre de borosilicate dépourvu d'arsenic et d'antimoine, qui comprend les oxydes suivants, en % en poids par rapport à la quantité totale de verre :
| | |
|---|---|
| SiO₂ | 30 à 85 |
| B₂O₃ | 3 à 20 |
| Al₂O₃ | 0 à 15 |
| Na₂O | 3 à 15 |
| K₂O | 3 à 15 |
| ZnO | 0 à 12 |
| TiO₂ | 0,5 à 10 |
| CaO | 0 à 0,1 |
et au moins un composé de sélénium contenant de l'oxygène en quantités de 0,001 % en poids à 0,1 % en poids par rapport à la quantité totale de verre, ce composé étant choisi parmi des sels d'acide sélénieux, des sels d'acide sélénique, de dioxyde de sélénium (SeO₂), de trioxyde de sélénium (SeO₃) et leurs mélanges et en outre au moins 150 ppm (m/m) de sulfate.

2. Verre de borosilicate dépourvu d'arsenic et d'antimoine selon la revendication 1, qui comprend les oxydes suivants, en % en poids par rapport à la quantité totale de verre :
| | |
|---|---|
| SiO₂ | 35 à 70 |
| B₂O₃ | 3 à 17 |
| Al₂O₃ | 0 à 12 |
| Na₂O | 3 à 12 |
| K₂O | 3 à 12 |
| ZnO | 0 à 10 |
| TiO₂ | 0,5 à 8 |
| CaO | 0 à 0,1 |
et le composé de sélénium contenant de l'oxygène en quantités de 0,001 % en poids à 0,1 % en poids par rapport à la quantité totale de verre.

3. Verre de borosilicate dépourvu d'arsenic et d'antimoine selon la revendication 1 ou 2, qui comprend les oxydes suivants, en % en poids par rapport à la quantité totale de verre :
| | |
|---|---|
| SiO₂ | 40 à 70 |
| B₂O₃ | 3 à 15 |
| Al₂O₃ | 0 à 10 |
| Na₂O | 3 à 12 |
| K₂O | 3 à 12 |
| ZnO | 0 à 8 |
| TiO₂ | 0,5 à 6 |
| CaO | 0 à 0,1 |
et le composé de sélénium contenant de l'oxygène en quantités de 0,001 % en poids à 0,1 % en poids par rapport à la quantité totale de verre.

4. Verre de borosilicate selon une ou plusieurs des revendications 1 à 3, le verre étant constitué exclusivement des composants nommés dans celles-ci.

5. Procédé de production d'un verre de borosilicate selon l'une des revendications 1 à 4, comprenant les étapes de procédé suivantes :
- mélange des composants de départ, qui sont des matières premières de la production de verre, comme par exemple des carbonates, des sulfates, des nitrates, des hydroxydes ou des oxydes,
- chauffage du mélange à une température d'au moins 1350 à 1550° C, une masse fondue homogène étant ainsi formée,
- refroidissement de la masse fondue à la température de moulage et en même temps ou ensuite moulage du verre de la façon souhaitée.

6. Procédé selon la revendication 5, après affinage, la masse fondue étant placée sur un lit flottant pour le moulage, le verre étant moulé selon le procédé down-draw ou étant transformé en tubes ou en fibres.

7. Utilisation de composés de sélénium contenant de l'oxygène, pour l'affinage d'un verre de borosilicate qui comprend les oxydes suivants, en % en poids par rapport à la quantité totale de verre :
| | |
|---|---|
| SiO₂ | 30 à 85 |
| B₂O₃ | 3 à 20 |
| Al₂O₃ | 0 à 15 |
| Na₂O | 3 à 15 |
| K₂O | 3 à 15 |
| ZnO | 0 à 12 |
| TiO₂ | 0,5 à 10 |
| CaO | 0 à 0,1 |
le composé de sélénium contenant de l'oxygène étant content en quantités de 0,001 % en poids à 0,1 % en poids par rapport à la quantité totale de verre, et ce composé étant choisi parmi des sels d'acide sélénieux, des sels d'acide sélénique, de dioxyde de sélénium (SeO₂), de trioxyde de sélénium (SeO₃) et leurs mélanges et en outre au moins 150 ppm (m/m) de sulfate.

8. Utilisation d'un verre selon une ou plusieurs des revendications 1 à 4, comme conducteur de lumière IR, verre de protection de photocapteurs ou verre filtrant.
